# DEMANDE DE BREVET EUROPEEN

(11) **EP 1 737 204 A2**
(43) Date de publication de la demande: **27.12.2006**
(21) Numéro de dépôt: 06300521.9
(22) Date de dépôt: 29.05.2006
(51) Int. Cl.: H04M 3/493, H04M 1/725, H04L 29/06

(54) **Équipement de réseau pour la transmission de modules logiciels de contrôle à des terminaux mobiles**

(30) Priorité: 07.06.2005 FR 0551524
(71) Demandeur: ALCATEL, 75008 Paris (FR)
(72) Inventeur: Maillard, Hervé, 91430, IGNY (FR)

(57) **Abrégé**

Un équipement de réseau (NE) est dédié à des réseaux d'accès radio (RAN1,RAN2), de types différents et raccordés à un réseau fédérateur (IPN) auquel est couplé au moins un équipement d'applications (SE) comportant au moins une application externe (EA) pouvant échanger des données avec au moins une application interne (IA1) implantée dans des terminaux mobiles multimodes (MS), comprenant en outre au moins deux interfaces de réseau (N11,N12) pouvant être connectées à des réseaux d'accès radio. Cet équipement (NE) comprend des moyens de gestion (MM) chargés de transmettre à un terminal désigné (MS) un module logiciel de contrôle (CM) assurant, une fois implanté, une fonction « proxy », d'interfaçage entre applications interne(s) (IA1) et externe(s) (EA), chargée, lorsqu'elle reçoit d'une application interne (IA1) une demande de transaction désignant une application externe (EA), de déterminer parmi les interfaces de réseau (NI1, NI2) celle qui est adaptée à la transaction en fonction d'informations de contrôle et d'informations de routage, puis d'ordonner au système d'exploitation (OS) du terminal (MS) de transmettre la demande de transaction à l'application externe désignée via une connexion de niveau transport entre l'interface de réseau déterminée et l'équipement d'applications (SE) contenant l'application externe.

## Description

L'invention concerne les ensembles de réseaux de communication radio couplés entre eux par l'intermédiaire d'un réseau fédérateur, et plus précisément le contrôle de l'accès de terminaux mobiles à des réseaux d'accès radio pour communiquer avec des applications externes pendant des sessions de service.

On entend ici par « terminal mobile » tout terminal de radiocommunication mobile ou portable capable d'échanger des données sous la forme de signaux radio, soit avec un autre terminal ou équipement de réseau, via leur(s) réseau(x) de rattachement, soit avec son propre réseau de rattachement. Il pourra donc s'agir, par exemple, de téléphones mobiles, ou d'ordinateurs portables ou d'assistants personnels numériques (ou PDA) équipés de modules de communication radio.

Certains terminaux mobiles, dits multimodes, sont agencés de manière à pouvoir accéder à plusieurs (au moins deux) réseaux d'accès radio différents. Par exemple, ils sont adaptés aux communications, d'une part, GPRS/EDGE et/ou UMTS, et d'autre part, WLAN et/ou WiFi et/ou WiMAX. Ces terminaux disposent donc de plusieurs interfaces de réseau définies par exemple sur des cartes électroniques de communication (de type téléphonique (GPRS/EDGE ou UMTS) ou de type PCMCIA (WiFi ou WiMAX)) qui leur permettent de se connecter aux réseaux d'accès radio correspondants. Il est également possible de constituer un « terminal multimodes » à partir d'une combinaison de deux terminaux mobiles, comme par exemple un téléphone mobile connecté par un port série à un ordinateur portable (ou « laptop »).

Par exemple, lorsque le réseau fédérateur, auquel sont couplés les réseaux d'accès radio, est à protocole Internet (ou IP), les terminaux multimodes peuvent se raccorder, via ces réseaux d'accès radio, à des équipements de réseau (ou équipements d'applications) couplés au réseau Internet et comportant des serveurs d'applications externes (ou sites Internet), afin d'échanger des données avec ces serveurs. A titre d'exemple illustratif, une application externe peut être dédiée à la transmission de musique ou de film (« streaming » - transfert de flux de données audio, video et analogues).

Pour que l'utilisateur d'un terminal multimodes puisse télécharger des données gérées par une application externe distante, son terminal doit disposer d'une application interne, comme par exemple un navigateur Internet (ou « web browser »), capable d'initier ce que l'on appelle une session de service avec ladite application externe.

Comme le sait l'homme de l'art, une session de service est constituée de transactions (de service) de types différents, définies par des caractéristiques propres et auxquelles sont associées des sémantiques de service. La sémantique de service définit le sens d'une transaction donnée compte tenu de l'application concernée. Par exemple, une transaction peut consister à rechercher un site Internet, ou une page donnée d'un site Internet, ou à demander la transmission d'un film, ou encore à demander l'arrêt provisoire ou définitif, de la transmission d'un film.

Chaque transaction émanant d'une application demandeuse (interne ou externe) doit être transmise à l'application demandée (externe ou interne) qu'elle désigne, via une connexion dite de niveau transport (ou « socket ») établie entre les équipements (par exemple un terminal multimodes et un serveur d'applications) dans lesquels les applications demandeuse et demandée (interne et externe) sont implantées.

Or, au cours d'une même session des transactions successives, de types différents ou non, ne requièrent pas forcément l'utilisation d'une même connexion (de niveau transport) de haut, voire très haut, débit. Par exemple, il est inutile d'utiliser une connexion de très haut débit pour transmettre une demande d'arrêt provisoire ou définitif de transmission de données vidéo, laquelle nécessite une telle connexion.

De même, dans certaines circonstances, il serait souhaitable d'attendre pendant un cours instant qu'un accès à une connexion haut débit soit possible plutôt que d'initier immédiatement une session avec une connexion de débit inférieur induisant une moins bonne qualité de restitution. Par exemple, lorsqu'un terminal bimodes UMTS/WiFi est déplacé dans une zone où sont situés des « points chauds » (« ou hot spots ») WiFi, il serait avantageux d'attendre de lui transmettre des données vidéo à haut débit, via le réseau d'accès WiFi, chaque fois qu'il parvient dans un hot spot.

Il résulte de l'analyse qui précède qu'il serait particulièrement avantageux de pouvoir choisir le réseau d'accès radio qui est adapté à chaque transaction qu'un terminal multimodes souhaite effectuer. Or, tel n'est pas le cas aujourd'hui.

En effet, les terminaux multimodes, tels que les ordinateurs portables (ou « laptops ») et les PDAs, sont actuellement agencés de manière à choisir l'interface de réseau, qui doit être utilisée pour accéder à une application demandée, en fonction de l'adresse de destination de l'équipement d'applications dans lequel cette application demandée est implantée et de la route (ou du chemin) qui est notamment associé(e) à cette adresse de destination dans la table de routage du terminal multimodes.

Par conséquent, lorsqu'une telle route existe dans la table de routage, l'application demandeuse est contrainte de choisir l'interface de réseau qui est connectée au réseau d'accès radio par lequel passe cette route. Lorsque cette route n'existe pas dans la table de routage, l'application demandeuse est contrainte d'utiliser une route par défaut qui est liée à une interface de réseau assurant la connectivité à un unique réseau d'accès radio. Ainsi, dans la pratique l'interface de réseau liée à la route par défaut est systématiquement utilisée, exceptée lorsqu'elle n'est pas disponible.

Dans les terminaux multimodes actuels, l'application (interne) demandeuse ne peut donc pas contrôler les interfaces de réseau qui sont utilisées pour effectuer les transactions.

Pour tenter d'améliorer la situation, la société ALCATEL a proposé de modifier, d'une part, le système d'exploitation des terminaux multimodes afin d'enrichir la couche dite « socket API » (interface de programmation d'application de connexion de niveau transport), et d'autre part, les applications internes afin qu'elles puissent mettre en oeuvre des mécanismes de sélection de réseau d'accès capables d'utiliser les modifications apportées à la couche socket API. Cette solution contraint les fabricants des applications internes des terminaux multimodes à modifier leurs applications et ne permet pas aux opérateurs des réseaux d'accès radio d'intervenir dans le mode de sélection de leurs réseaux d'accès, ce qui limite notablement les critères de sélection.

L'invention a donc pour but d'améliorer la situation.

Elle propose à cet effet un équipement de réseau pour un ensemble d'au moins deux réseaux d'accès radio, de types différents et raccordés à un réseau fédérateur auquel est couplé au moins un équipement d'applications comportant au moins une application externe pouvant échanger des données avec au moins une application interne implantée dans des terminaux mobiles de radiocommunication multimodes, comprenant en outre chacun un système d'exploitation, au moins deux interfaces réseau couplées au système d'exploitation, disposant chacune d'une adresse et propres à être respectivement connectées à des réseaux d'accès radio de l'ensemble.

Cet équipement de réseau se caractérise par le fait qu'il comprend des moyens de gestion chargés de transmettre à un terminal mobile multimodes désigné, via une connexion de signalisation, un module logiciel de contrôle propre à assurer, une fois implanté dans le terminal désigné, une fonction « proxy », d'interfaçage entre ses applications interne(s) et des applications externe(s), agencée, chaque fois qu'elle reçoit une demande de transaction, désignant une application externe, d'une application interne de son terminal mobile, de déterminer parmi les interfaces de réseau dudit terminal mobile celle qui est adaptée à la transaction en fonction d'informations de contrôle et d'informations de routage, puis d'ordonner au système d'exploitation de transmettre la demande de transaction à l'application externe désignée, via une connexion de niveau transport (ou socket) entre l'interface de réseau déterminée et l'équipement d'applications contenant l'application externe.

On entend ici par « fonction proxy » un module intercalé entre deux applications et se faisant passer pour l'une des deux applications auprès de l'autre, et réciproquement, conformément à la définition donnée par l'IETF.

L'équipement de réseau selon l'invention peut comporter d'autres caractéristiques qui peuvent être prises séparément ou en combinaison, et notamment :
- il peut comprendre des moyens de mémorisation propres à stocker une partie au moins des informations de contrôle. Dans ce cas, ses moyens de gestion sont chargés de transmettre aux terminaux mobiles, via les connexions de signalisation, des informations de contrôle qui les concernent (stockées dans les moyens de mémorisation), afin qu'elles puissent servir à leur module logiciel de contrôle pour déterminer une interface de réseau devant être utilisée pour transmettre au moins une demande de transaction ;
   ➢ ses moyens de gestion peuvent être chargés, lorsqu'ils reçoivent une requête en provenance d'un module logiciel de contrôle d'un terminal mobile, de transmettre à ce module logiciel de contrôle, via la connexion de signalisation établie avec son terminal mobile, des informations de contrôle qui le concernent ;
   ➢ dans une variante, ses moyens de gestion peuvent être chargés, lorsqu'ils reçoivent des instructions provenant d'un réseau d'accès radio et désignant au moins un terminal mobile, de transmettre au module logiciel de contrôle de ce terminal désigné, via sa connexion de signalisation, des informations de contrôle qui le concernent ;
- ses moyens de gestion peuvent être chargés d'initier l'établissement d'une connexion de signalisation avec un terminal désigné ;
- les informations de contrôle sont par exemple choisies parmi des données de types d'application associées à des données de types d'interface de réseau, des données de types de transaction associées à des données de types d'interface de réseau, des données de types d'application et de types de transaction associées à des données de types d'interface de réseau, des données représentatives du poids des données à transmettre à une application interne associées à des données de types d'interface de réseau, et des données d'informations de réseau associées à des données de types d'interface de réseau ;
- ses moyens de traitement peuvent être chargés de communiquer avec chaque module logiciel de contrôle implanté dans un terminal mobile au moyen d'un protocole de transport d'hypertextes (HTTP (pour « HyperText Transmission Protocol »)).

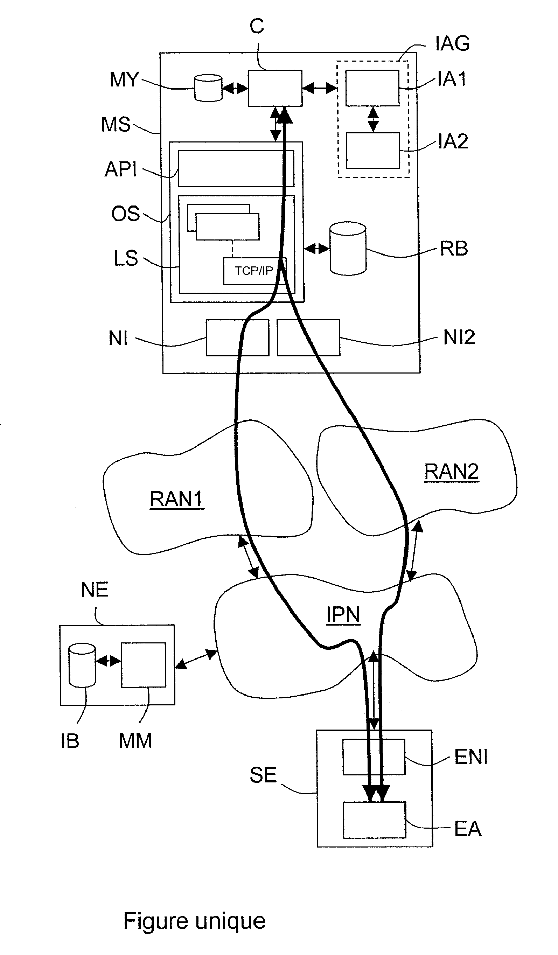

D'autres caractéristiques et avantages de l'invention apparaîtront à l'examen de la description détaillée ci-après, et du dessin annexé, sur lequel l'unique figure illustre de façon très schématique un exemple de réalisation d'un équipement de réseau selon l'invention, couplé à un réseau fédérateur auquel sont raccordés deux réseaux d'accès radio, eux-mêmes couplés à un terminal mobile bimodes. Le dessin annexé pourra non seulement servir à compléter l'invention, mais aussi contribuer à sa définition, le cas échéant.

L'invention a pour objet d'offrir à des terminaux mobiles de radiocommunication multimodes la possibilité de sélectionner automatiquement des réseaux d'accès radio pendant des sessions de service.

Dans ce qui suit, on considère à titre d'exemple non limitatif que les terminaux mobiles de radiocommunication multimodes sont des ordinateurs portables bimodes équipés d'une carte PCMCIA WiFi et d'une carte de téléphonie mobile UMTS. Mais, bien entendu, l'invention n'est pas limitée à cette seule application. Elle concerne en effet tous les terminaux de communication mobiles ou portables, multimodes, capables d'échanger des données sous la forme de signaux radio soit avec un autre terminal ou équipement de réseau, via leur(s) réseau(x) de rattachement, soit avec son propre réseau de rattachement. Il pourra donc s'agir, par exemple, de téléphones mobiles ou d'assistants personnels numériques (ou PDA) multimodes. Par ailleurs, l'invention n'est pas limitée aux terminaux bimodes de type UMTS/WiFi. Elle concerne en effet tous les terminaux mobiles capables d'accéder à au moins deux réseaux d'accès radio de types différents grâce à au moins deux interfaces de réseau correspondant auxdits types différents et disposant chacune d'une adresse propre. Ainsi, l'invention concerne les combinaisons d'interfaces de réseau GSM et/ou GPRS/EDGE et/ou UMTS (ou HSDPA) et/ou WLAN (Wireless Local Area Network, comme par exemple Hyperlan (selon la norme ETSI) ou 802.11 (selon la norme IEEE)) et/ou WMAN (Wireless Metropolitan Area Network, comme par exemple 802.16 selon la norme IEEE) et/ou Bluetooth, notamment.

Dans l'exemple illustré sur l'unique figure, on a représenté un ensemble de deux réseaux d'accès radio RAN1 et RAN2 raccordés à un réseau fédérateur IPN, par exemple à protocole Internet (ou IP), tel que le réseau Internet.

Le réseau d'accès radio RAN1 est par exemple de type UMTS tandis que le réseau d'accès radio RAN2 est par exemple de type WiFi. Bien entendu, l'ensemble de réseaux d'accès radio peut comporter un nombre de réseaux d'accès radio supérieur à deux.

Par ailleurs, dans l'exemple illustré un équipement d'applications distant SE est couplé au réseau fédérateur IPN et contient au moins une application externe EA. Cet équipement de réseau distant SE est par exemple un serveur d'applications disposant d'une adresse, par exemple de type adresse IP. L'application externe EA est par exemple une application dédiée à la transmission de vidéos (ou « video streaming »).

En général, un grand nombre d'équipements d'applications SE sont ainsi couplés au réseau fédérateur IPN.

Des terminaux mobiles multimodes MS (par exemple des ordinateurs portables) peuvent se connecter au réseau fédérateur IPN via les réseaux d'accès radio RAN1 et RAN2 (dans cet exemple).

Chaque terminal mobile multimodes MS comprend classiquement :
- un système d'exploitation (ou « operating System ») OS, par exemple de type Windows ou Linux, comportant notamment une interface de programmation d'application API et une pile de couches LS dont une couche de transport, par exemple de type TCP/IP,
- une base de données de routage RB, couplée au système d'exploitation OS, et dans laquelle se trouvent stockées des données de routage, définissant des routes (ou chemins) permettant d'accéder à des équipements distants désignés par des adresses (dites de destination), par exemple de type IP, et agencées sous la forme d'une table de routage. Plus précisément, chaque entrée de la table de routage est une adresse de destination,
- un ensemble IAG d'au moins une application interne IA1 permettant d'échanger des données avec au moins une application externe EA implantée dans un équipement d'applications distant SE. Par exemple, l'application interne IA est un navigateur Internet (ou « web browser »), couplé à une autre application interne IA2 dédiée à la lecture de vidéos, et
- au moins deux interfaces réseau NI1 et NI2 couplées au système d'exploitation OS, disposant chacune d'une adresse, par exemple de type adresse IP, et pouvant être respectivement connectées aux réseaux d'accès radio RAN1 et RAN2.

Selon l'invention, certains au moins des terminaux multimodes MS comprennent également un module logiciel de contrôle CM qui leur est transmis par un équipement de réseau NE via une connexion de signalisation (non représentée).

Plus précisément, l'équipement de réseau NE, selon l'invention, comprend un module de gestion MM chargé de transmettre à un terminal mobile multimodes désigné MS, via une connexion de signalisation, le module logiciel de contrôle CM.

La transmission consiste en un téléchargement (ou « downloading »). Elle se fait soit à l'initiative d'un terminal multimodes MS, soit à l'initiative de l'équipement de réseau NE, lorsqu'il en reçoit l'instruction, par exemple de l'opérateur du (ou des) réseau(x) de communication au(x)quel(s) est abonné l'utilisateur d'un terminal multimodes MS, par exemple consécutivement à l'adhésion de cet utilisateur à une option de sélection automatique de réseau d'accès radio.

Chaque connexion de signalisation, qui est établie entre un terminal multimodes MS et l'équipement de réseau NE et qui permet de lui transmettre un module logiciel de contrôle CM, est initiée soit par le module de gestion MM de l'équipement de réseau NE lorsqu'il a pris l'initiative de cette transmission, soit par le terminal multimodes MS lorsqu'il a requis cette transmission.

Le module logiciel de contrôle CM peut par exemple se présenter sous la forme de ce que l'homme de l'art appelle un « proxylet ».

Ce module logiciel de contrôle CM est propre à assurer, une fois implanté dans le terminal multimodes désigné MS, une fonction « proxy » d'interfaçage entre l'ensemble IAG de ses applications internes IA1 et IA2 et les applications externes EA.

Comme indiqué précédemment, la définition de la fonction proxy est ici celle donnée par l'IETF. Par conséquent, il s'agit d'un module logiciel (ou informatique) destiné à être intercalé (une fois implanté) entre des applications internes d'un terminal multimodes (ici IA1 et IA2) et des applications externes (ici EA) et se faisant passer pour une application auprès d'une autre application, et réciproquement.

Une fois implanté dans un terminal multimodes MS, ce module logiciel de contrôle CM (à fonction proxy) est chargé, chaque fois qu'une application interne IAi (ici i = 1 ou 2) lui transmet une demande de transaction de service désignant une application externe EA, pendant une session de service, de déterminer parmi les interfaces de réseau Nlj (ici j = 1 ou 2) celle qui est adaptée à cette transaction en fonction d'informations de contrôle et d'informations de routage.

On entend ici par « informations de routage » des données de routage stockées dans la table de routage de la base de données de routage RB, ainsi que des données de disponibilité signalant si les interfaces de réseau Nlj sont effectivement connectées ou non aux réseaux d'accès radio correspondants RANj.

Les échanges entre une application interne IAi et le module logiciel de contrôle CM peuvent par exemple se faire conformément à un protocole de transport tel qu'UDP (« User Datagram Protocol ») ou TCP/IP (« Transmission Control Protocol / Internet Protocol ») ou encore SCTP (« Streaming Control Transport Protocol »), notamment.

Le module logiciel de contrôle CM dispose d'une adresse interne (désignée par l'expression anglaise « loop back address » par l'homme de l'art), telle que « 127.0.0.1 » dans le cas IPv4 (version n°4 du protocole Internet (IP)). Cette adresse interne, qui désigne le numéro de port du module logiciel de contrôle CM, est connue de chaque application interne IAi de l'ensemble IAG. Elle est intégrée dans l'entête des paquets IP contenant la demande de transaction à transmettre, tout comme l'adresse de destination désignant l'équipement de réseau SE contenant l'application externe EA concernée par la transaction demandée.

Le module logiciel de contrôle CM accède aux données de routage en adressant des commandes systèmes au système d'exploitation OS qui est couplé à la base de données de routage RB dans laquelle se trouve stockée la table de routage. Par ailleurs, le module logiciel de contrôle CM accède aux données de disponibilité en adressant des commandes systèmes au système d'exploitation OS, et plus précisément à son API.

On entend ici par « informations de contrôle » toutes données spécifiant un type d'interface de réseau Nlj à utiliser en correspondance d'un type d'application interne et/ou d'un type de transaction et/ou d'informations de réseau.

Le type d'une transaction désigne non seulement une ou des opérations à effectuer, mais également ce que l'homme de l'art appelle la sémantique de service, laquelle est associée à la transaction. La désignation d'une opération à effectuer peut par exemple comporter des informations relatives au poids d'un fichier vidéo à télécharger.

Les informations de réseau peuvent être par exemple des données d'informations représentatives des coûts d'accès aux différents réseaux d'accès radio RANj, ou bien des données d'informations de répartition de charge (ou « load balancing »).

Les informations de contrôle définissent en quelque sorte une table qui fait correspondre une interface de réseau NIj donnée à une situation donnée, définie par une application interne désignée et/ou une transaction demandée et/ou des informations de réseau. Ainsi, chaque fois que le module logiciel de contrôle CM reçoit une demande de transaction à transmettre à une application externe EA, il détermine la situation présente (définie par les informations de contrôle dont il dispose) et sélectionne l'interface de réseau NIj qui correspond à cette situation et que le système d'exploitation OS doit utiliser pour transmettre cette demande de transaction à l'application externe EA désignée, sous réserve qu'elle soit disponible.

Les informations de contrôle peuvent être stockées dans des moyens de mémorisation MY d'un terminal multimodes MS, lesquels peuvent se présenter sous n'importe quelle forme, et notamment sous la forme d'une mémoire ou d'une base de données.

Une partie au moins des informations de contrôle peut être communiquée, par téléchargement, à un terminal multimodes MS dans lequel a été implanté par téléchargement le module logiciel de contrôle CM, par un équipement de réseau appartenant, par exemple, à l'opérateur du (ou des) réseau(x) de communication au(x)quel(s) est abonné l'utilisateur du terminal multimodes MS. Comme cela est illustré sur l'unique figure, il est avantageux (bien que non obligatoire) que l'équipement de réseau qui transmet aux terminaux multimodes MS les informations de contrôle soit également celui (NE) qui leur a transmis par téléchargement leur module logiciel de contrôle CM. Dans ce cas, c'est le module de gestion MM de l'équipement de réseau NE qui se charge de gérer la transmission des informations de contrôle, via les connexions de signalisation préalablement établies. A cet effet, le module de gestion MM est par exemple couplé à des moyens de mémorisation IB, tels qu'une base de données d'informations, implantés dans l'équipement de réseau NE et dans lesquels sont stockées les informations de contrôle, éventuellement en correspondance des identifiants des différents terminaux multimodes MS (dans lesquels ont été implantés par téléchargement un module logiciel de contrôle CM).

Le téléchargement d'informations de contrôle peut se faire à l'initiative du module de gestion MM de l'équipement de réseau NE, par exemple périodiquement ou chaque fois qu'un événement survient dans le réseau ou lorsque de nouvelles applications internes ou externes sont commercialisées. Mais, on peut également envisager que le téléchargement d'informations de contrôle se fasse à l'initiative d'un module logiciel de contrôle CM, par exemple périodiquement, ou chaque fois qu'une application interne d'un type nouveau est implantée dans son terminal multimodes MS ou qu'une application externe inconnue est désignée, ou encore chaque fois qu'il reçoit une demande de transaction à transmettre (dans ce cas, aucune donnée d'information de contrôle n'est stockée dans le terminal multimodes MS et le module logiciel de contrôle CM n'a plus qu'à vérifier la disponibilité de l'interface de réseau Nlj qui lui est proposée par l'équipement de réseau NE).

En variante ou en complément, une partie au moins des informations de contrôle peut être transmise par l'équipement de réseau NE en même temps que le module logiciel de contrôle CM. Dans ce cas, ces informations de contrôle sont stockées dans une mémoire MY du terminal multimodes MS.

On peut également envisager une version basique de l'invention dans laquelle les informations de contrôle se résument à une table de correspondance dans laquelle chaque type d'application est associé à un type d'interface de réseau. Dans ce cas, les informations de contrôle peuvent éventuellement faire directement partie du module logiciel de contrôle CM qui est téléchargé.

Le module de traitement MM de l'équipement de réseau NE peut communiquer avec chaque module logiciel de contrôle CM implanté dans un terminal multimodes MS au moyen, par exemple, d'un protocole de transport d'hypertextes ou HTTP (pour « HyperText Transmission Protocol »).

Une fois qu'un module logiciel de contrôle CM a sélectionné l'interface de réseau NIj adaptée à la situation (grâce aux informations de contrôle dont il dispose), il adresse préférentiellement des commandes systèmes au système d'exploitation OS afin de vérifier parmi les informations de routage, qui sont stockées dans la table de routage de la base de données de routage RB, si elle contient déjà une route définissant une connexion de niveau transport (socket) entre l'interface de réseau sélectionnée Nlj et l'équipement d'applications SE contenant l'application externe EA qui est concernée par la transaction demandée. En d'autres termes, le module logiciel de contrôle CM vérifie si l'une des entrées de la table de routage est constituée par une adresse (IP) de destination désignant l'équipement d'applications SE qui contient l'application externe EA concernée par la transaction demandée.

Il est important de noter que l'adresse de destination n'est pas obligatoirement celle de l'équipement d'applications SE. Il peut en effet s'agir d'une adresse d'un réseau auquel est raccordé l'équipement d'applications SE ou d'une partie de ce réseau.

Si la route est définie dans la table de routage, alors le module logiciel de contrôle CM procède préférentiellement à la vérification de la disponibilité de l'interface de réseau NIj qu'il a sélectionnée. On entend ici par « disponibilité » le fait que l'interface de réseau NIj soit utilisable (ou « enable »). Il peut en effet arriver qu'une interface de réseau ait perdu la connectivité avec le réseau. Pour ce faire, le module logiciel de contrôle CM adresse préférentiellement des commandes systèmes au système d'exploitation OS, et plus précisément à son interface de connexion API (ou socket API). Des commandes systèmes telles que « IPCONFIG » (pour Windows) et « IFCONFIG » (pour Linux) permettent en effet à une fonction proxy interne (ici CM) de connaître l'état de disponibilité des interfaces de réseau Nlj et leurs identifiants.

Si l'interface de réseau Nlj sélectionnée est effectivement disponible, alors le module logiciel de contrôle CM considère qu'elle constitue l'interface de réseau déterminée. Il ordonne alors au système d'exploitation OS de transmettre la demande de transaction à l'application externe désignée EA, via la connexion de niveau transport (ou socket) établie entre l'interface de réseau déterminée Nlj et l'équipement d'applications SE qui contient cette application externe EA.

Par exemple, le module logiciel de contrôle CM transmet ses ordres au système d'exploitation OS au moyen d'un protocole de transport d'hypertextes tel que HTTP (pour « HyperText Transmission Protocol »), adapté aux communications avec les applications externes EA.

Si l'interface de réseau Nlj sélectionnée n'est pas disponible, alors le module logiciel de contrôle CM doit en sélectionner une autre.

Si la route permettant d'atteindre l'application externe demandée EA n'est pas définie dans la table de routage, alors le module logiciel de contrôle CM adresse préférentiellement des commandes systèmes au système d'exploitation OS afin qu'il crée cette route et intègre sa définition dans la table de routage de la base de données de routage RB. Des commandes systèmes telles que « ROUTE ADD IP@ mask NI-identifier » permettent en effet d'intégrer de nouvelles entrées dans la table de routage. Il existe également des commandes systèmes permettant de supprimer des entrées dans la table de routage.

Une fois que la route a été intégrée dans la table de routage, alors le module logiciel de contrôle CM procède préférentiellement à la vérification de la disponibilité de l'interface de réseau Nlj qu'il a sélectionnée. Puis, si l'interface de réseau Nlj sélectionnée est effectivement disponible, alors le module logiciel de contrôle CM considère qu'elle constitue l'interface de réseau déterminée. Il ordonne alors au système d'exploitation OS de transmettre la demande de transaction à l'application externe désignée EA, via la connexion de niveau transport (ou socket) établie entre l'interface de réseau déterminée Nlj et l'équipement d'applications SE qui contient cette application externe EA. Dans le cas contraire (interface de réseau indisponible), le module logiciel de contrôle CM doit sélectionner une autre interface de réseau (disponible).

Le module de gestion MM de l'équipement de réseau NE selon l'invention, ainsi que son éventuelle base de données d'informations IB, peuvent être réalisés sous la forme de circuits électroniques, de modules logiciels (ou informatiques), ou d'une combinaison de circuits et de logiciels.

Trois exemples d'applications, non limitatifs, sont brièvement décrits ci-après.

Un premier exemple d'application concerne la sélection d'interfaces de réseau d'accès radio en fonction du type de transaction à transmettre. On suppose dans cet exemple que le terminal multimodes MS peut accéder aux réseaux sans fil à couverture discontinue (« Discontinuous coverage ») et aux réseaux mobiles UMTS. Il est rappelé que les accès dits à couverture discontinue ont été conçus pour offrir un très haut débit de données à bas coût pour des trafics non interactifs (et donc des transactions qui ne sont pas en temps réel) et relativement longs, tels que le streaming et les flux de données dites d'arrière plan (ou « background data »). Par ailleurs, l'accès UMTS est bien adapté aux transactions interactives, relativement courtes.

Pendant une session de streaming, les deux accès peuvent être utilisés selon le type de transaction à transmettre. Ainsi, le module logiciel de contrôle CM, téléchargé, peut décider, d'une part, de transmettre par l'interface de réseau UMTS les messages de type RTSP (pour « Real Time Streaming Protocol »), qui contiennent des transactions permettant notamment de sélectionner un fichier à visualiser, d'échanger des paramètres, de configurer des connexions, ou de demander l'arrêt d'une vidéo ou un retour en arrière, et d'autre part, de transmettre les flux de données vidéo par l'interface de réseau dédiée à la couverture discontinue. Le choix effectué par le module logiciel de contrôle CM peut également prendre en compte d'autres informations de contrôle, comme par exemple les coûts d'accès aux deux réseaux d'accès radio et/ou le poids (en terme d'octets) des fichiers vidéo à télécharger.

Un deuxième exemple d'application concerne la sélection d'interfaces de réseau d'accès radio en fonction d'informations de répartition de charge (ou « load balancing »). On suppose ici qu'un utilisateur navigue sur Internet au moyen du navigateur Nl1, implanté dans son terminal multimodes MS, et connecté au réseau Internet via un réseau d'accès local sans fil (WLAN) constitué de « hot spots » dont les accès sont presque saturés. Pour éviter que la qualité de la navigation se dégrade, du fait de la saturation des hot spots, le module logiciel de contrôle CM, téléchargé, peut décider de changer d'interface de réseau, et donc de réseau d'accès, au moins momentanément, pour transmettre les messages de type « HTTP GET » provenant du navigateur Nl1.

Un troisième exemple d'application concerne la sélection d'interfaces de réseau d'accès radio en fonction du type d'application interne utilisée. Le module logiciel de contrôle CM, téléchargé, d'un terminal multimodes MS, peut par exemple être configuré de sorte que les applications internes de voix sous IP (VolP) utilisent toutes l'interface de réseau connectée au réseau d'accès radio UMTS, tandis que l'application interne de navigation Internet utilise l'interface de réseau connectée à un réseau d'accès local sans fil (WLAN).

L'invention ne se limite pas aux modes de réalisation d'équipement de réseau décrits ci-avant, seulement à titre d'exemple, mais elle englobe toutes les variantes que pourra envisager l'homme de l'art dans le cadre des revendications ci-après.

## Revendications

1. Equipement de réseau (NE) pour un ensemble d'au moins deux réseaux d'accès radio (RAN1,RAN2), de types différents et raccordés à un réseau fédérateur (IPN) auquel est couplé au moins un équipement d'applications (SE) comportant au moins une application externe (EA) propre à échanger des données avec au moins une application interne (lA1) implantée dans des terminaux mobiles de radiocommunication multimodes (MS), comprenant en outre chacun un système d'exploitation (OS), au moins deux interfaces réseau (NI1,NI2) couplées audit système d'exploitation (OS), disposant chacune d'une adresse et propres à être respectivement connectées à des réseaux d'accès radio (RAN1,RAN2) dudit ensemble, **caractérisé en ce qu'**il comprend des moyens de gestion (MM) agencés pour transmettre à un terminal mobile multimodes désigné, via une connexion de signalisation, un module logiciel de contrôle (CM) propre à assurer, une fois implanté dans ledit terminal désigné (MS), une fonction « proxy », d'interfaçage entre ses applications interne(s) (IA1 ) et des applications externe(s) (EA), agencée, chaque fois qu'elle reçoit une demande de transaction désignant une application externe (EA) d'une application interne (IA1) dudit terminal (MS), pour déterminer parmi lesdites interfaces de réseau (NI1,NI2) dudit terminal (MS) celle qui est adaptée à ladite transaction en fonction d'informations de contrôle et d'informations de routage, puis pour ordonner audit système d'exploitation (OS) de transmettre ladite demande de transaction à ladite application externe (EA) désignée via une connexion de niveau transport entre ladite interface de réseau déterminée et l'équipement d'applications (SE) contenant ladite application externe (EA).

2. Equipement de réseau selon la revendication 1, **caractérisé en ce qu'**il comprend des moyens de mémorisation (IB) propres à stocker une partie au moins desdites informations de contrôle, et **en ce que** lesdits moyens de gestion (MM) sont agencés pour transmettre auxdits terminaux (MS), via ladite connexion de signalisation, des informations de contrôle qui les concernent, stockées dans lesdits moyens de mémorisation (IB), de sorte qu'elles puissent servir à leur module logiciel de contrôle (CM) pour déterminer une interface de réseau devant être utilisée pour transmettre au moins une demande de transaction.

3. Equipement de réseau selon la revendication 2, **caractérisé en ce que** lesdits moyens de gestion (MM) sont agencés, à réception d'une requête en provenance d'un module logiciel de contrôle (CM) d'un terminal mobile (MS), pour transmettre à ce module logiciel de contrôle (CM), via ladite connexion de signalisation établie avec son terminal mobile (MS), des informations de contrôle qui le concernent.

4. Equipement de réseau selon l'une des revendications 2 et 3, **caractérisé en ce que** lesdits moyens de gestion (MM) sont agencés, à réception d'instructions provenant d'un réseau d'accès radio (RAN1, RAN2) et désignant au moins un terminal mobile (MS), pour transmettre au module logiciel de contrôle (CM) de ce terminal désigné (MS), via ladite connexion de signalisation, des informations de contrôle qui le concernent.

5. Equipement de réseau selon l'une des revendications 1 à 4, **caractérisé en ce que** lesdits moyens de gestion (MM) sont agencés pour initier l'établissement d'une connexion de signalisation entre son équipement de réseau (NE) et un terminal désigné (MS).

6. Equipement de réseau selon l'une des revendications 1 à 5, **caractérisé en ce que** lesdites informations de contrôle sont choisies dans un groupe comprenant au moins des données de types d'application associées à des données de types d'interface de réseau, des données de types de transaction associées à des données de types d'interface de réseau, des données de types d'application et de types de transaction associées à des données de types d'interface de réseau, des données représentatives du poids des données à transmettre à une application interne associées à des données de types d'interface de réseau, et des données d'informations de réseau associées à des données de types d'interface de réseau.

7. Equipement de réseau selon l'une des revendications 1 à 6, **caractérisé en ce que** lesdits moyens de traitement (MM) sont agencés pour communiquer avec chaque module logiciel implanté dans un terminal mobile (MS) au moyen d'un protocole de transport d'hypertextes (HTTP).
